# EUROPÄISCHE PATENTSCHRIFT

(11) **EP 0 468 951 B1**
(45) Veröffentlichungstag und Bekanntmachung des Hinweises auf die Patenterteilung: **15.12.1993**
(21) Anmeldenummer: 91890141.4
(22) Anmeldetag: 04.07.1991
(51) Int. Cl.: B01J 39/04, C02F 1/42

(54) **Verfahren zur Abtrennung von Aminoxiden aus wässerigen Lösungen**
Process for separating aminooxides from aqueous solutions
Procédé pour la séparation d'oxides aminés des solutions aqueuses

(30) Priorität: 24.07.1990 AT 1554/90
(43) Veröffentlichungstag der Anmeldung: 29.01.1992
(73) Patentinhaber: Lenzing Aktiengesellschaft, A-4860 Lenzing (AT)
(72) Erfinder: Weinzierl, Karin, Dipl.-Ing., A-4850 Timelkam (AT); Astegger, Stephan, Mag. Dr., A-4840 Vöcklabruck (AT); Eichinger, Dieter, Dr. Dipl.-Ing., A-4840 Vöcklabruck (AT); Firgo, Heinrich, Dr. Dipl.-Ing., A-4840 Vöcklabruck (AT); Wolschner, Bernd, Dr. Dipl.-Ing., A-4840 Vöcklabruck (AT); Zikeli, Stefan, Ing., A-4844 Regau (AT)
(74) Vertreter: Müllner, Erwin, Dr.

(56) Entgegenhaltungen:
- EP-A- 0 402 347
- DD-A- 274 435
- FR-A- 1 319 465
- FR-A- 2 342 945

## Beschreibung

Verfahren zur Abtrennung von Aminoxiden, insbesondere von N-Methylmorpholinoxid (NMMO), aus wässerigen Lösungen, insbesondere aus Abwässern, die bei der Celluloseverarbeitung anfallen, bei welchem Verfahren die Lösungen mit einem Kationenaustauscherharz in Kontakt gebracht werden, um den Kationenaustauscher mit den Aminoxiden zu beladen, worauf der beladene Kationenaustauscher gewaschen und die Aminoxide eluiert werden.

Es ist bekannt, Cellulose in wässerigen Lösungen von Aminoxiden, insbesondere von N-Methylmorpholinoxid (NMMO), einzubringen und spinnfähige homogene Cellulose-Lösungen herzustellen. Durch Ausfällen dieser Lösungen in Wasser werden Folien, Fäden oder Formteile auf Cellulosebasis erhalten. Bei der Nachbehandlung der Produkte fallen Abwässer an, die bis zu 4 % Masse NMMO enthalten. Bevor diese Abwässer entsorgt werden können, muß das enthaltene NMMO weitgehend abgetrennt werden.

Ein Verfahren der eingangs beschriebenen Art ist aus der SU-A - 1 427 011 bekannt. Bei diesem Verfahren wird das NMMO an einem stark sauren Kationenaustauscher adsorbiert. Als Eluierungsmittel wird ammoniakalischer, wässeriger Isopropylalkohol verwendet. Nach der Eluierung muß der Kationenaustauscher mit Schwefelsäure wieder in die Säureform übergeführt werden.

Diese Methode hat sich technisch und energetisch als sehr aufwendig erwiesen, da ein NMMO-hältiges Ammoniak-Wasser-Isopropylalkohol-Gemisch anfällt, das destillativ aufgearbeitet werden muß. Dabei werden zunächst die flüchtigen Bestandteile (Ammoniak und Isopropylalkohol) abgetrennt, worauf die verbleibende wässerige NMMO-Lösung durch eine weitere Destillation zu NMMO-Monohydrat aufkonzentriert wird. Ferner fällt bei der Regenerierung des kationenaustauschers eine stark saure Ammoniumsulfatlösung an, die mit Ammoniak neutralisiert und anschließend durch Eindampfen zu festem Ammonsulfat aufgearbeitet werden muß.

Die Erfindung setzt sich zum Ziel, diese Nachteile zu beseitigen und ein Verfahren der eingangs beschriebenen Art zur Verfügung zu stellen, das ohne einen Neutralisierungsschritt und ohne energieaufwendige Trenn- und Regenerierungsschritte durchgeführt werden kann.

Dieses Ziel wird erfindungsgemäß erreicht, indem bei einem Verfahren der eingangs beschriebenen Art ein Kationenaustauscher eingesetzt wird, dessen Ankergruppen aus Carboxylgruppen bestehen und indem der mit Aminoxiden beladene Kationenaustauscher mit einer wässerigen Lösung einer schwachen Säure mit einem pKₐ-Wert von größer als 3,0 behandelt wird, um die Aminoxide zu eluieren. Aus dem Eluat können die Aminoxide durch Destillation abgetrennt werden, wobei die kondensierten Brüden wieder als Eluierungsmittel verwendet werden können.

Es hat sich gezeigt, daß sich das erfindungsgemäße Verfahren insbesondere zu Aufarbeitung von Lösungen mit bis zu 4 % Masse NMMO besonders gut eignet, da es eine praktisch quantitative Abtrennung des NMMO aus dem Abwasser gestattet.

Eine bevorzugte Variante des erfindungsgemäßen Verfahrens besteht darin, daß eine schwache Säure eingesetzt wird, deren Siedepunkt unter 120°C liegt. Als solche kommen insbesondere Ameisensäure oder Essigsäure in Betracht, welche in der wässerigen Lösung vorzugsweise zwischen 8 und 15 % Masse enthalten sind. Aber auch Kohlensäure hat sich als geeignet erwiesen, sofern sie in der wässerigen Lösung in einer konzentration zwischen 2 und 20 % Masse, vorzugsweise zwischen 10 und 15 % Masse, vorliegt.

Mit den nachfolgenden Beispielen wird das erfindungsgemäße Verfahren noch näher beschrieben.

### Beispiel 1

100 ml eines schwach sauren kationenaustauschers mit Carboxylgruppen als Ankergruppen (Lewatit CNP 80 (Grundgerüst: Polyacrylat); Hersteller: Bayer AG) wurden in einer Durchflußsäule mit 5 Bettvolumina (BV), d.h. 500 ml einer 1 %-igen wässerigen NMMO-Lösung beladen, wobei die Durchflußgeschwindigkeit 10 BV/h betrug. Anschließend wurde mit 10 BV einer wässerigen, 10 %-igen Essigsäurelösung das NMMO eluiert und der Kationenaustauscher regeneriert und mit 15 BV Wasser nachgewaschen (Geschwindigkeit: 5 BV/h). Im Waschwasser war mit herkömmlichen Methoden (Titration und HPLC) kein NMMO nachweisbar.

Das anfallende Gemisch von NMMO und Essigsäure (1000 ml) wurde unter Vakuum (100 mbar) auf 100 °C erhitzt und 950 ml abdestilliert. In dem Destillat fanden sich 98 % der eingesetzten Essigsäure wieder; die NMMO Lösung wurde auf 10 % aufkonzentriert.

### Beispiel 2

Durchführung wie in Beispiel 1 beschrieben; die Beladung erfolgte jedoch mit 8 BV einer 0,5 %-igen NMMO-Lösung. Im Waschwasser konnte kein NMMO nachgewiesen werden. Die Aufarbeitung des Eluates erfolgte wie in Beispiel 1 beschrieben. Die NMMO/Essigsäure Mischung wurde auf 50 ml eingeengt, im Destillat fanden sich 100 % der Essigsäure wieder, die NMMO Konzentration im Sumpf stieg auf 8 %.

### Beispiel 3

Durchführung wie in Beispiel 1 beschrieben; die Beladung erfolgte jedoch mit 2 BV einer 4 %-igen NMMO-Lösung und die Waschung mit 15 BV Wasser. Im Waschwasser konnte kein NMMO nachgewiesen werden.

Die Aufarbeitung des Eluates erfolgte wie in Beispiel 1 beschrieben. Die NMMO/Essigsäure Mischung wurde auf 300 ml eingeengt, dann wurden 200 ml Wasser zugesetzt und diese Mischung auf 50 ml eingeengt; im Destillat fanden sich 97 % der Essigsäure wieder, die NMMO Konzentration im Sumpf stieg auf 16 %.

### Beispiel 4

100 ml eines schwach sauren Kationenaustauschers mit Carboxylgruppen als Ankergruppen (Dowex CCR-2 (Grundgerüst: Polyacrylat); Hersteller: Dow Chemical) wurden in einer Durchflußsäule mit 7 BV einer 1 %-igen wässerigen NMMO-Lösung beladen, wobei die Durchflußgeschwindigkeit 10 BV/h betrug. Anschließend wurde mit 10 BV einer wässerigen, 10 %-igen Essigsäurelösung das NMMO eluiert und der Kationenaustauscher regeneriert und mit 15 Bv Wasser nachgewaschen (Geschwindigkeit: 5 BV/h). Im Waschwasser war mit herkömmlichen Methoden (Titration und HPLC) kein NMMO nachweisbar.

Die Aufarbeitung des Eluats erfolgte wie in Beispiel 1 beschrieben. Die NMMO/Essigsäure Mischung wurde auf 80 ml eingeengt; im Destillat fanden sich 97 % der Essigsäure wieder; die NMMO konzentration im Sumpf stieg auf 8,5 %.

### Beispiel 5

100 ml eines schwach sauren Kationenaustauschers mit Carboxylgruppen als Ankergruppen (Duolite C 433 (Grundgerüst: Polyacrylat); Hersteller: Rohm und Haas) wurden in einer Durchflußsäule mit 4 BV einer 1 %-igen wässerigen NMMO-Lösung beladen, wobei die Durchflußgeschwindigkeit 10 BV/h betrug. Anschließend wurde mit

10 BV einer wässerigen, 10 %-igen Essigsäurelösung das NMMO eluiert und der Kationenaustauscher regeneriert und mit 10 BV Wasser nachgewaschen (Geschwindigkeit: 5 BV/h). Im Waschwasser war mit herkömmlichen Methoden (Titration und HPLC) kein NMMO nachweisbar.

Die Aufarbeitung des Eluats erfolgte wie in Beispiel 1 beschrieben. Die NMMO/Essigsäure Mischung wurde auf 40 ml eingeengt; im Destillat fanden sich 100 % der Essigsäure wieder, die NMMO Konzentration im Sumpf stieg auf 10 %.

## Patentansprüche

1. Verfahren zur Abtrennung von Aminoxiden, insbesondere von N-Methylmorpholinoxid, aus wässerigen Lösungen, insbesondere aus Abwässern, die bei der Celluloseverarbeitung anfallen, bei welchem Verfahren die Lösungen mit einem Kationenaustauscherharz in Kontakt gebracht werden, um den Kationenaustauscher mit den Aminoxiden zu beladen, worauf der beladene Kationenaustauscher gewaschen und die Aminoxide eluiert werden, dadurch gekennzeichnet, daß ein Kationenaustauscherharz eingesetzt wird, dessen Ankergruppen aus Carboxylgruppen bestehen und daß der mit Aminoxiden beladene Kationenaustauscher mit einer wässerigen Lösung einer schwachen Säure mit einem pKₐ-Wert von größer als 3,0 behandelt wird, um die Aminoxide zu eluieren.

2. Verfahren nach Anspruch 1, dadurch gekennzeichnet, daß eine schwache Säure eingesetzt wird, deren Siedepunkt unter 120°C liegt.

3. Verfahren nach Anspruch 2, dadurch gekennzeichnet, daß als schwache Säure Ameisensäure oder Essigsäure eingesetzt wird, wobei die Säure in der wässerigen Lösung vorzugsweise zwischen 8 und 15 % Masse enthalten ist.

4. Verfahren nach Anspruch 2, dadurch gekennzeichnet, daß als schwache Säure Kohlensäure eingesetzt wird, welche in der wässerigen Lösung in einer Konzentration zwischen 2 und 20 % Masse, vorzugsweise zwischen 10 und 15 % Masse, vorliegt.

## Claims

1. Method for the separation of amine oxides, in particular N-methylmorpholine oxide, from aqueous solutions, in particular waste water which is produced in cellulose processing, in which method the solutions are brought into contact with a cation exchange resin in order to load the ion exchanger with the amine oxides, whereupon the laden cation exchanger is washed and the amine oxides are eluted, characterised in that a cation exchange resin of which the anchor groups consist of carboxyl groups is used and in that the cation exchanger laden with amine oxides is treated with an aqueous solution of a weak acid with a PKₐ value of more than 3.0 in order to elute the amine oxides.

2. Method according to claim 1, characterised in that a weak acid of which the boiling point is below 120°C is used.

3. Method according to claim 2, characterised in that formic acid or acetic acid is used as the weak acid, wherein the acid is contained in the aqueous solution at preferably between 8 and 15% weight.

4. Method according to claim 2, characterised in that carbonic acid which is present in the aqueous solution in a concentration between 2 and 20% weight, preferably between 10 and 15% weight, is used as the weak acid.

## Revendications

1. Procédé de séparation d'aminoxydes, en particulier de N-méthylmorpholinoxyde, provenant de solutions aqueuses, en particulier des effluents résultant du traitement de la cellulose, procédé au cours duquel les solutions sont mises en contact d'une résine échangeuse de cations, afin de charger l'échangeur de cations avec les aminoxydes, puis l'échangeur de cations chargé est lavé et les aminoxydes sont élués, caractérisé en ce que l'on utilise une résine échangeuse de cations dont les groupements actifs sont des groupes carboxyles, et en ce que l'échangeur de cations chargé d'aminoxydes est traité à l'aide d'une solution aqueuse d'un acide faible ayant une valeur de pKₐ supérieure à 3,0, afin d'éluer les aminoxydes .

2. Procédé selon la revendication 1, caractérisé en ce que l'on utilise un acide faible, dont le point de fusion est inférieur à 120°C.

3. Procédé selon la revendication 2, caractérisé en ce que l'on utilise comme acide faible l'acide formique ou l'acide acétique, ledit acide étant contenu dans la solution aqueuse de préférence en une quantité comprise entre 8 et 15% en proportion pondérale.

4. Procédé selon la revendication 2, caractérisé en ce que l'on utilise comme acide faible du dioxyde de carbone, lequel est présent dans la solution aqueuse en une concentration comprise entre 2 et 20%, et de préférence entre 10 et 15% en proportion pondérale.
